# EUROPÄISCHE PATENTSCHRIFT

(11) **EP 3 019 342 B1**
(45) Veröffentlichungstag und Bekanntmachung des Hinweises auf die Patenterteilung: **19.12.2018**
(21) Anmeldenummer: 14716853.8
(22) Anmeldetag: 14.04.2014
(51) Int. Cl.: B60C 9/09, B60C 15/06

(54) **FAHRZEUGLUFTREIFEN**
PNEUMATIC VEHICLE TYRE
PNEUMATIQUE DE VÉHICULE

(30) Priorität: 09.07.2013 DE 102013107207
(43) Veröffentlichungstag der Anmeldung: 18.05.2016
(73) Patentinhaber: Continental Reifen Deutschland GmbH, 30165 Hannover (DE)
(72) Erfinder: VOLK, Heiner, 31535 Neustadt (DE); KRISHNAMURTHY, Kumar, 30173 Hannover (DE)
(74) Vertreter: Widjaja, Wira
(86) Internationale Anmeldenummer: PCT/EP2014/057462
(87) Internationale Veröffentlichungsnummer: WO 2015/003828

(56) Entgegenhaltungen:
- EP-A1- 0 301 093
- WO-A1-2006/132631
- WO-A1-2013/117711
- WO-A1-2014/040977
- JP-A- 2001 277 820
- US-A- 4 573 511
- US-A1- 2008 006 359

## Beschreibung

Die Erfindung betrifft einen Fahrzeugluftreifen gemäß dem Oberbegriff des Anspruches 1.

Es ist bekannt, bei Fahrzeugluftreifen im Reifenwulst sog. Wulstverstärker mit eingebetteten Festigkeitsträgern anzuordnen. Der Wulstverstärker kann unterschiedliche Funktionen besitzen. Eine Aufgabe ist beispielsweise, die Dauerhaltbarkeit des Reifenwulstes zu erhöhen. Beim Einsatz von textilen Festigkeitsträgern, die im Reifenwulst angeordnet sind, kann das Problem auftreten, dass die einzelnen Festigkeitsträger aufgrund der hohen Belastungen in der Seitenwand und im Reifenwulst beschädigt werden.

Ein Reifen der eingangs genannten Art ist beispielsweise aus der WO 2006/132631 A1 bekannt. Bei einer Ausführungsvariante erstreckt sich ein Wulstverstärker, welcher Festigkeitsträger aus einem textilen Material, beispielsweise Aramid, aufweist, im Reifenwulst zwischen der Karkasslage und dem Kernprofil und ferner entlang der Außenseite der Karkasslage bis unterhalb der Gürtellagen. Weitere Ausführungen von Fahrzeugluftreifen mit derart angeordneten Wulstverstärkern mit textilen Festigkeitsträgern sind aus der US 4 573 511 A, der EP 0 301 093 A1 und aus der US 2008/006359 A1 bekannt.

Der Erfindung liegt die Aufgabe zu Grunde, einen Fahrzeugluftreifen zu schaffen, bei der die Dauerhaltbarkeit von Fahrzeugluftreifen verbessert wird.

Gelöst wird die Aufgabe gemäß dem Oberbegriff und den kennzeichnenden Merkmalen des Anspruchs 1 dadurch, dass
der Wulstverstärker Festigkeitsträger aus druckfestem Stahlcord aufweist, welche aus einzelnen Monofilamenten mit einem Durchmesser von ca. 0,3 mm bestehen.

Ein Vorteil des erfindungsgemäßen Reifenwulstes ist insbesondere darin zu sehen, dass der Fahrzeugluftreifen durch die neuartige Reifenkonstruktion eine bessere Dauerhaltbarkeit aufweist gegenüber einer herkömmlichen Reifenkonstruktion.
Die verbesserte Dauerhaltbarkeit des Fahrzeugreifens wird insbesondere durch Synergie-Effekte erzielt, die mit den einzelnen Merkmalen des Anspruchs 1 in Verbindung stehen. Die im Wulstverstärker eingebetteten Festigkeitsträger aus Stahlcord halten den hohen Zug- und Druckbelastungen im Reifenwulst und in der Seitenwand stand. Außerdem sind beide Lagenenden des Wulstverstärkers in beruhigten Zonen des Fahrzeugreifens angeordnet und enden nicht, wie bei herkömmlichen Reifenkonstruktionen, beispielsweise im mittleren Bereich der Seitenwand. Das obere Lagenende des Wulstverstärkers ist bis weit unterhalb des Reifengürtels angeordnet. Dadurch besitzt das obere Lagenende des Wulstverstärkers ebenfalls die Funktion einer Sperrlage für den Reifengürtel. Durch diese Reifenkonstruktion wird ebenfalls das Handling des Fahrzeugreifens wesentlich verbessert. Die Festigkeitsträger im Wulstverstärker besitzen ferner eine relativ hohe Zug- und Druckfestigkeit.

In einer weiteren vorteilhaften Weiterbildung der Erfindung ist vorgesehen, dass der Wulstverstärker im Reifenwulst kurz oberhalb des Reifenkernes endet.
Dadurch ist das Lagenende des Wulstverstärkers im Reifenwulst in einer besonders beruhigten Zone angeordnet, in der es geringeren Beanspruchungen ausgesetzt ist.

In einer weiteren vorteilhaften Weiterbildung der Erfindung ist vorgesehen, dass der Wulstverstärker unterhalb der Gürtellagen maximal bis zur ersten Umfangsrille reicht.

Dadurch besitzt der Fahrzeugreifen verbesserte Hochgeschwindigkeitseigenschaften aufgrund einer runderen Reifenkontur. Der Reifenzenit des Fahrzeugreifens kann mehr wachsen als die Reifenschultern.

In einer weiteren vorteilhaften Weiterbildung der Erfindung ist vorgesehen, dass der Wulstverstärker unterhalb der Gürtellagen eine Breite zwischen ca. 40 und 55 mm aufweist.
Bei diesem Breitenbereich wird eine optimale Schräglaufsteife für den Fahrzeugreifen erreicht.

In einer weiteren vorteilhaften Weiterbildung der Erfindung ist vorgesehen, dass die Festigkeitsträger des Wulstverstärkers in Umfangsrichtung zum Fahrzeugreifen in einen Winkelbereich zwischen ca. 55° und 70 °, vorzugsweise in einem Winkelbereich von ca. 60 ° bis 65 °, angeordnet sind.
In diesem Winkelbereich können die Festigkeitsträger des Wulstverstärkers optimal als Sperrlage für den Reifengürtel eingesetzt werden.

In einer weiteren vorteilhaften Weiterbildung der Erfindung ist vorgesehen, dass die Festigkeitsträger der ersten und/oder zweiten Gürtellage in Umfangsrichtung zum Fahrzeugreifen in einen Winkelbereich zwischen ca. 20° und 36 ° angeordnet sind. Dadurch wird ein optimaler Winkelbereich zwischen den Festigkeitsträgern der Gürtellage und den Festigkeitsträgern des Wulstverstärkers erreicht.

In einer weiteren vorteilhaften Weiterbildung der Erfindung ist vorgesehen, dass im Reifenwulst ein kurzes Kernprofil mit einer maximalen Höhe von 18 mm angeordnet ist.

Dadurch kann der Reifenwulst kompakter ausgeführt werden.

In einer weiteren vorteilhaften Weiterbildung der Erfindung ist vorgesehen, dass das Lagenende der Karkasslage sich in Form einer C-Lage bis unterhalb des Reifengürtels erstreckt.
Auf diese Weise wird die Steifigkeit der Reifenseitenwände wesentlich erhöht.

In einer weiteren vorteilhaften Weiterbildung der Erfindung ist vorgesehen, dass das der Fahrzeugluftreifen ein Ultra-High-Performance-Reifen ist.
Bei dieser Art von Fahrzeugreifen sind verbesserte Hochgeschwindigkeitseigenschaften von großer Bedeutung.

Anhand eines Ausführungsbeispieles soll die Erfindung näher erläutert werden. Es zeigen:
- Fig. 1:: einen Fahrzeugreifen im Querschnitt,
- Fig. 2:: Die Ausrichtung der Festigkeitsträger der unterschiedlichen Reifenbauteile in der Aufsicht auf einer Reifenaufbautrommel

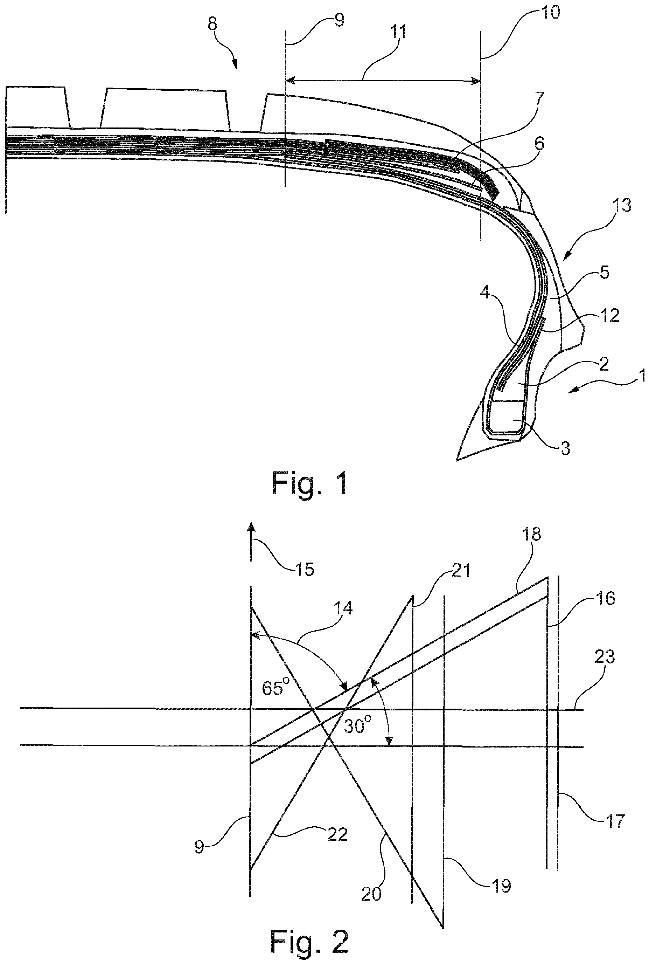

Die Figur 1 zeigt schematisch einen Fahrzeugluftreifen in einer Querschnittansicht, wobei nur eine Hälfte des Fahrzeugreifens dargestellt ist. Im Reifenwulst 1 ist ein Reifenkern 3 mit einem Kernprofil 2 angeordnet. Der Reifen weist eine Karkasslage 4 auf, die im Reifenwulst um den Reifenkern 3 herumgeschlagen ist. Das Lagenende 12 der Karkasslage 4 endet im Bereich der Seitenwand. Der Wulstverstärker 5 endet im Bereich des Reifenwulstes 1 kurz oberhalb des Reifenkernes 3 in einer beruhigten Zone, in der die Beanspruchungen relativ gering sind. Die höchsten Beanspruchungen sind in etwa im mittleren Bereich 13 der Seitenwand. Der Wulstverstärker 5 erstreckt sich entlang der Karkasslage 4 bis unter den Reifengürtel, der sich aus der ersten und zweiten Gürtellage 6 und 7 zusammensetzt. Der Endbereich 9 der Karkasslage 4 endet kurz vor Beginn der ersten Umfangsrille 8. Der seitliche Endbereich 10 des Reifengürtels wird durch das seitliche Ende der ersten Gürtellage 6 markiert. Die Breite 11 des Wulstverstärkers 5, die im Wesentlichen mit dem Endbereich des Wulstverstärkers unterhalb des Reifengürtels übereinstimmt, beträgt vorzugsweise zwischen 40 und 55 mm. Durch die dargestellte Reifenkonstruktion wird insbesondere die Schräglaufsteife durch eine steife Seitenwand verbessert. Außerdem besitzt der Fahrzeugreifen verbesserte Hochgeschwindigkeitseigenschaften sowie eine höhere Dauerhaltbarkeit.

Die Figur 2 zeigt schematisch die Anordnung der unterschiedlichen Festigkeitsträger in einer Aufsicht bei Auflegen der einzelnen Bauteile auf einer Reifenaufbautrommel. Die Festigkeitsträger 23 der Karkasslage sind in radialer Richtung in etwa senkrecht zur Umfangsrichtung 15 des Fahrzeugreifens angeordnet. Die Festigkeitsträger 18 des Wulstverstärkers weisen einen Winkelbereich zwischen ca. 55 und 70°, bezogen auf die Umfangsrichtung 15, auf. Die Festigkeitsträger der ersten und zweiten Gürtellage sind in einem Winkelbereich von ca. 20 bis 36° angeordnet. Durch die entsprechende Anordnung der Festigkeitsträger 18 des Wulstverstärkers wird eine optimale Sperrwirkung auf die darüber liegenden Gürtellagen erzielt. Die Ausrichtung der Festigkeitsträger der Gürtellagen ist mit den Strichen 20 und 22 dargestellt. Die Reifenkerne werden in etwa an der Position 17 auf der Reifenaufbautrommel aufgelegt. Das Lagenende 16 des Wulstverstärkers endet kurz neben der Position 17 des Reifenkernes.

### Bezugszeichenliste

- 1: Reifenwulst
- 2: Kernprofil
- 3: Kern
- 4: Karkasslage
- 5: Wulstverstärker
- 6: Erste Gürtellage
- 7: Zweite Gürtellage
- 8: Erste Umfangsrille
- 9: Endbereich des Wulstverstärkers unterhalb des Reifengürtels
- 10: Seitlicher Endbereich der Gürtellage
- 11: Breite bzw. Endbereich des Wulstverstärkers unterhalb des Reifengürtels
- 12: Lagenende der Karkasslage
- 13: Bereich in der Seitenwand, die einer hohen Belastung ausgesetzt ist
- 14: Winkel der Festigkeitsträger im Wulstverstärker
- 15: Umfangsrichtung
- 16: Lagenende des Wulstverstärkers im Reifenwulst
- 17: Position des Kernes bei der Positionierung auf einer Reifenaufbautrommel
- 18: Verlauf der Festigkeitsträger im Wulstverstärker
- 19: Lagenende der ersten Gürtellage
- 20: Verlauf der Festigkeitsträger in der ersten Gürtellage
- 21: Lagenende der zweiten Gürtellage
- 22: Verlauf der Festigkeitsträger in der zweiten Gürtellage
- 23: Verlauf der Festigkeitsträger in der Karkasslage (90°)

## Patentansprüche

1. Fahrzeugluftreifen mit einem Laufstreifen, einem Reifengürtel, einer Reifenseitenwand und einem Reifenwulst (1) mit einem Kern (3) und einem Kernprofil (2),
wobei der Reifengürtel mindestens zwei Gürtellagen (6, 7) mit eingebetteten Festigkeitsträgern (20, 22) umfasst,
wobei das Kernprofil (2) den Kern (3) rotations-symmetrisch zur axialen Achse des Fahrzeugluftreifens umschließt und mindestens eine Karkasslage (4) um den Kern (3) mit dem Kernprofil (2) herumgeschlagen ist,
wobei im Reifenwulst (1) ein Wulstverstärker (5) aus einem Gummimaterial mit eingebetteten Festigkeitsträgern angeordnet ist,
wobei der Wulstverstärker (5) im Reifenwulst (1) zwischen der Karkasslage (4) und dem Kernprofil (2) angeordnet ist und sich entlang der Außenseite der Karkasslage (4) bis unterhalb der Gürtellagen (6, 7) erstreckt,
wobei der Wulstverstärker (5) unterhalb der Gürtellagen (6, 7) im Randbereich des Reifengürtels endet,
wobei der Endbereich des Wulstverstärkers (9) im Randbereich maximal 30 % der gesamten Breite des Reifengürtels abdeckt,
wobei der Endbereich des Wulstverstärkers in Form einer Sperrlage mit den darüber liegenden Gürtellagen (6, 7) gekoppelt ist und dadurch die Beweglichkeit der Gürtellagen (6, 7) zueinander wesentlich eingeschränkt wird,
**dadurch gekennzeichnet, dass**
der Wulstverstärker (5) Festigkeitsträger (18) aus druckfestem Stahlcord aufweist, welche aus einzelnen Monofilamenten mit einem Durchmesser von ca. 0,3 mm bestehen.

2. Fahrzeugluftreifen nach Anspruch 1,
**dadurch gekennzeichnet, dass**
der Wulstverstärker (5) im Reifenwulst (1) kurz oberhalb des Reifenkernes (3) endet.

3. Fahrzeugluftreifen nach einem der vorhergehenden Ansprüche,
**dadurch gekennzeichnet, dass**
der Wulstverstärker (5) unterhalb der Gürtellagen (6, 7) maximal bis zur ersten Umfangsrille (8) reicht.

4. Fahrzeugluftreifen nach einem der vorhergehenden Ansprüche,
**dadurch gekennzeichnet, dass**
der Wulstverstärker (5) unterhalb der Gürtellagen (6, 7) eine Breite zwischen ca. 40 und 55 mm aufweist.

5. Fahrzeugluftreifen nach einem der vorhergehenden Ansprüche,
**dadurch gekennzeichnet, dass**
die Festigkeitsträger (18) des Wulstverstärkers (5) in Umfangsrichtung zum Fahrzeugreifen in einen Winkelbereich (14) zwischen ca. 55° und 70 °, vorzugsweise in einem Winkelbereich von ca. 60 ° bis 65 °, angeordnet sind.

6. Fahrzeugluftreifen nach einem der vorhergehenden Ansprüche,
**dadurch gekennzeichnet, dass**
die Festigkeitsträger (20, 22) der ersten und/oder zweiten Gürtellage (6, 7) in Umfangsrichtung (15) zum Fahrzeugreifen in einen Winkelbereich zwischen ca. 20° und 36 ° angeordnet sind.

7. Fahrzeugluftreifen nach einem der vorhergehenden Ansprüche,
**dadurch gekennzeichnet, dass**
im Reifenwulst (1) ein kurzes Kernprofil (2) mit einer maximalen Höhe von 18 mm angeordnet ist.

8. Fahrzeugluftreifen nach einem der vorhergehenden Ansprüche,
**dadurch gekennzeichnet, dass**
das Lagenende der Karkasslage (12) sich in Form einer C-Lage bis unterhalb des Reifengürtels erstreckt.

9. Fahrzeugluftreifen nach einem der vorhergehenden Ansprüche,
**dadurch gekennzeichnet, dass**
das der Fahrzeugluftreifen ein Ultra-High-Performance-Reifen ist.

## Claims

1. Pneumatic vehicle tyre with a tread, a tyre breaker belt, a tyre sidewall and a tyre bead (1) with a bead core (3) and a bead filler (2),
the tyre breaker belt comprising at least two belt plies (6, 7) with embedded reinforcing elements (20, 22),
the bead filler (2) enclosing the bead core (3) rotationally symmetrically in relation to the axial axis of the pneumatic vehicle tyre and at least one carcass ply (4) being turned up around the bead core (3) with the bead filler (2),
a bead reinforcer (5) of a rubber material with embedded reinforcing elements being arranged in the tyre bead (1),
the bead reinforcer (5) being arranged in the tyre bead (1) between the carcass ply (4) and the bead filler (2) and extending along the outer side of the carcass ply (4) to under the belt plies (6, 7),
the bead reinforcer (5) ending under the belt plies (6, 7) in the peripheral region of the tyre breaker belt,
the end region of the bead reinforcer (9) in the peripheral region covering a maximum of 30% of the overall width of the tyre breaker belt,
the end region of the bead reinforcer in the form of a barrier ply being coupled to the belt plies (6, 7) lying thereover, and thereby essentially restricting the mobility of the belt plies (6, 7) in relation to one another,
**characterized in that**
the bead reinforcer (5) comprises reinforcing elements (18) of compression-resistant steel cord,
which consist of individual monofilaments with a diameter of about 0.3 mm.

2. Pneumatic vehicle tyre according to Claim 1,
**characterized in that**
the bead reinforcer (5) in the tyre bead (1) ends just above the tyre core (3).

3. Pneumatic vehicle tyre according to one of the preceding claims,
**characterized in that**
the bead reinforcer (5) under the belt plies (6, 7) reaches as a maximum up to the first circumferential groove (8).

4. Pneumatic vehicle tyre according to one of the preceding claims,
**characterized in that**
the bead reinforcer (5) under the belt plies (6, 7) has a width of between about 40 and 55 mm.

5. Pneumatic vehicle tyre according to one of the preceding claims,
**characterized in that**
the reinforcing elements (18) of the bead reinforcer (5) are arranged in the circumferential direction with respect to the vehicle tyre in an angular range (14) of between about 55° and 70°, preferably in an angular range of about 60° to 65°.

6. Pneumatic vehicle tyre according to one of the preceding claims,
**characterized in that**
the reinforcing elements (20, 22) of the first and/or second belt plies (6, 7) are arranged in the circumferential direction (15) with respect to the vehicle tyre in an angular range of between about 20° and 36°.

7. Pneumatic vehicle tyre according to one of the preceding claims,
**characterized in that**
a short bead filler (2) with a maximum height of 18 mm is arranged in the tyre bead (1).

8. Pneumatic vehicle tyre according to one of the preceding claims,
**characterized in that**
the ply end of the carcass ply (12) extends in the form of a C ply to below the tyre breaker belt.

9. Pneumatic vehicle tyre according to one of the preceding claims,
**characterized in that**
the pneumatic vehicle tyre is an ultra high-performance tyre.

## Revendications

1. Pneumatique de véhicule comprenant une bande de roulement, une nappe d'armature de pneumatique, un flanc de pneumatique et un talon de pneumatique (1) pourvu d'un noyau (3) et d'un profilé de noyau (2), la nappe d'armature de pneumatique comprenant au moins deux couches de nappe d'armature (6, 7) pourvues d'éléments de renforcement intégrés (20, 22), le profilé de noyau (2) entourant le noyau (3) à symétrie de rotation par rapport à l'axe axial du pneumatique de véhicule et au moins un pli de carcasse (4) étant enroulé autour du noyau (3) pourvu du profilé de noyau (2), un renfort de talon (5) en caoutchouc à éléments de renforcement intégrés étant disposé dans le talon de pneumatique (1), le renfort de talon (5) étant disposé dans le talon de pneumatique (1) entre le pli de carcasse (4) et le profilé de noyau (2) et s'étendant le long du côté extérieur du pli de carcasse (4) jusqu'au-dessous des couches de nappe d'armature (6, 7), le renfort de talon (5) se terminant sous les couches de nappe d'armature (6, 7) dans la région de bord de la nappe d'armature de pneumatique, la région d'extrémité du renfort de talon (9) dans la région de bord couvrant au maximum 30 % de la largeur totale de la nappe d'armature de pneumatique, la région d'extrémité du renfort de talon étant accouplée sous la forme d'une couche de blocage aux couches de nappe d'armature superposées (6, 7), ce qui restreint sensiblement la mobilité des couches de nappe d'armature (6, 7) les unes par rapport aux autres, **caractérisé en ce que** le renfort de talon (5) comporte des éléments de renforcement (18) formés d'un câble d'acier résistant à la pression et constitués de monofilaments individuels d'un diamètre d'environ 0,3 mm.

2. Pneumatique de véhicule selon la revendication 1, **caractérisé en ce que** le renfort de talon (5) dans le talon de pneumatique (1) se termine juste au-dessus du noyau de pneumatique (3).

3. Pneumatique de véhicule selon l'une des revendications précédentes, **caractérisé en ce que** le renfort de talon (5) s'étend au-dessous des couches de nappe d'armature (6, 7) jusqu'à la première rainure circonférentielle (8).

4. Pneumatique de véhicule selon l'une des revendications précédentes, **caractérisé en ce que** le renfort du talon (5) sous les couches de nappe d'armature (6, 7) a une largeur comprise entre environ 40 et 55 mm.

5. Pneumatique de véhicule selon l'une des revendications précédentes, **caractérisé en ce que** les éléments de renforcement (18) du renfort de talon (5) sont disposés dans une plage angulaire (14) comprise entre environ 55° et 70°, de préférence dans une plage angulaire d'environ 60° à 65°, par rapport au pneumatique du véhicule dans la direction circonférentielle.

6. Pneumatique de véhicule selon l'une des revendications précédentes, **caractérisé en ce que** les éléments de renforcement (20, 22) des première et/ou deuxième couches de nappe d'armature (6, 7) sont disposés dans une plage angulaire comprise entre environ 20° et 36° par rapport au pneumatique du véhicule dans la direction circonférentielle (15).

7. Pneumatique de véhicule selon l'une des revendications précédentes, **caractérisé en ce qu'**un profilé de noyau court (2) d'une hauteur maximale de 18 mm est disposé dans le talon de pneumatique (1).

8. Pneumatique de véhicule selon l'une des revendications précédentes, **caractérisé en ce que** l'extrémité du pli de carcasse (12) s'étend sous la forme d'une couche en C jusqu'au-dessous de la nappe d'armature de pneu.

9. Pneumatique de véhicule selon l'une des revendications précédentes, **caractérisé en ce que** le pneumatique de véhicule est un pneumatique à ultra-hautes performances.
